(19) Europäisches Patentamt
European Patent Office
Office européen des brevets

(11) **EP 4 465 072 A1**

(12) **EUROPEAN PATENT APPLICATION**

(43) Date of publication:
**20.11.2024  Bulletin 2024/47**

(21) Application number: **24176495.0**

(22) Date of filing: **17.05.2024**

(51) International Patent Classification (IPC):
**G01S 5/14** *(2006.01)*        **G01S 5/02** *(2010.01)*

(52) Cooperative Patent Classification (CPC):
**G01S 5/14; G01S 5/0249**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.05.2023   US 202363467680 P
10.08.2023   US 202363518807 P**

(71) Applicant: **EXFO Oy
90590 Oulu (FI)**

(72) Inventors:
• **Jääski, Antti Mauno Ilmari
90590 Oulu (FI)**
• **Mäkelä, Tuure Risto
90590 Oulu (FI)**

(74) Representative: **Kolster Oy Ab
Salmisaarenaukio 1
P.O. Box 204
00181 Helsinki (FI)**

(54)     **ESTIMATING TARGET MOBILE GEOGRAPHIC LOCATION**

(57)     A solution for estimating the geographical location of a target device (112) is presented. The solution comprises obtaining measurement data from individual locations, the measurement data comprising a distance estimate (200) to the target device (112) from an apparatus (100) and the individual locations; adding (202) measurement data to a measurement data queue; determining (204) intersection points of circles having radiuses of measured distances and locations of the corresponding individual location as center points, when a given number of measurement data is present in the queue; determining (206) intersection points closest to each other and determining (208) estimated location of the target device (112) as center point of a vector connecting the intersection points closest to each other.

FIG. 1

**Description**

**FIELD OF THE DISCLOSURE**

The present disclosure relates generally to mobile networking. More particularly, the present disclosure relates to systems and methods for estimating target mobile geographical location.

**BACKGROUND OF THE DISCLOSURE**

Law Enforcement Agencies (LEA) can be equipped with devices for identifying targets in a crowd by locating the mobile phone they are carrying on their person, i.e., the mobile phone of the target. This procedure is usually referred to as Direction Finding (DF) or location finding. In the prior art methods, the distance estimate is shown to the user on an interface by showing a distance estimate-based radius around the measurement point. It is therefore hard to estimate a precise target mobile location as it can only be done by visually observing drawn circles on the map, and by trying to figure out where the center of mass is. Also, prior art methods are based on iterative methods. A Conjugate Gradient method is used, for example, to find best fitting points to minimize non-linear equations created based on distance estimates. Spherical coordinate systems have also been used.

Disadvantageously, these prior art methods do not allow the user to quickly and precisely locate the target. There is therefore a need for a fast and accurate method to calculate a target mobile geographical location.

**BRIEF SUMMARY OF THE DISCLOSURE**

Some aspects of the invention are defined by the independent claims.

According to an aspect, there is provided a method for estimating geographical location of a target mobile, the method including steps. In another aspect, there is provided an apparatus with a processor, and a memory including instructions, the instructions, when executed by the processor, cause the apparatus to implement the steps. In yet another aspect, there is provided a non-transitory computer-readable medium comprising computer program code, which, when executed by one or more microprocessors, causes the one or more microprocessors to execute the steps.

The steps include obtaining measurement data from individual locations, the measurement data comprising a distance estimate to the target mobile device from an apparatus and the individual locations; adding the measurement data to a measurement data queue; determining intersection points of circles having radiuses of measured distances and locations of a corresponding individual location of the individual locations as center points, when a given number of measurement data is present in the measurement data queue; determining two intersection points closest to each other; and determining an estimated location of the target mobile device as a center point of a vector connecting the two intersection points closest to each other.

The steps may further include comparing the obtained measurement data to predefined thresholds and selecting the measurement data to the measurement data queue based on the comparing.

The steps may further include determining whether the equations of the circles formed from the measurement data are satisfied at least at one point in space and selecting the measurement data to the measurement data queue based on the determination.

The steps may further include obtaining the measurement data in a spherical coordinate system; and performing spherical coordinate conversion to a cartesian coordinate system to the measurement data in the measurement data queue. The conversion may include adjusting coordinates of the cartesian coordinate system by placing a first measurement at origin and adjusting the coordinates of subsequent measurements accordingly.

The steps may further include adding estimates of the location of the target mobile device to a location queue; when a given minimum number of locations of the target mobile device is present in the location queue (note, the size of the location queue is dynamic and the minimum and maximum sizes of the location queue can be parameters of the algorithm), determining a geometrical median of the locations in the location queue; and outputting the geometrical median of the locations as an overall estimated location of the target mobile device. The steps may further include discarding an oldest location before adding a newer location to the location queue when a given maximum number of locations of the target mobile device is present in the location queue.

**BRIEF DESCRIPTION OF THE DRAWINGS**

The present disclosure is detailed through various drawings, where like components or steps are indicated by identical reference numbers for clarity and consistency.

FIG. 1 illustrates an embodiment of a Direction Finding (DF) or location finding apparatus.

FIG. 2A illustrates 2A an example the operation of the Direction Finding (DF) or location finding apparatus of FIG. 1 in an embodiment.

FIG. 2B illustrates another example of the operation of the Direction Finding (DF) or location finding apparatus of FIG. 1 in an embodiment.

FIG. 3 illustrates another example of the operation of the Direction Finding (DF) or location finding apparatus of FIG. 1 in an embodiment.

FIG. 4A shows a simple situation where all measurements are accurate.

FIG. 4B shows a situation where the measurements are inaccurate.

FIG. 4C shows another inaccurate distance estimate.

## DETAILED DESCRIPTION OF THE DISCLOSURE

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

Reference numbers, both in the description of the embodiments and in the claims, serve to illustrate the embodiments with reference to the drawings, without limiting it to these examples only.

The embodiments and features, if any, disclosed in the following description that do not fall under the scope of the independent claims are to be interpreted as examples useful for understanding various embodiments of the invention.

In the present disclosure, Long Term Evolution (LTE) is used as an example of a system where embodiments of the invention are applied. However, embodiments can be applied in other mobile systems as well, as one skilled in the art is aware. Examples of possible systems include 2G, 3G and 5G (or NR, New Radio). The embodiments do not depend on any LTE specific features.

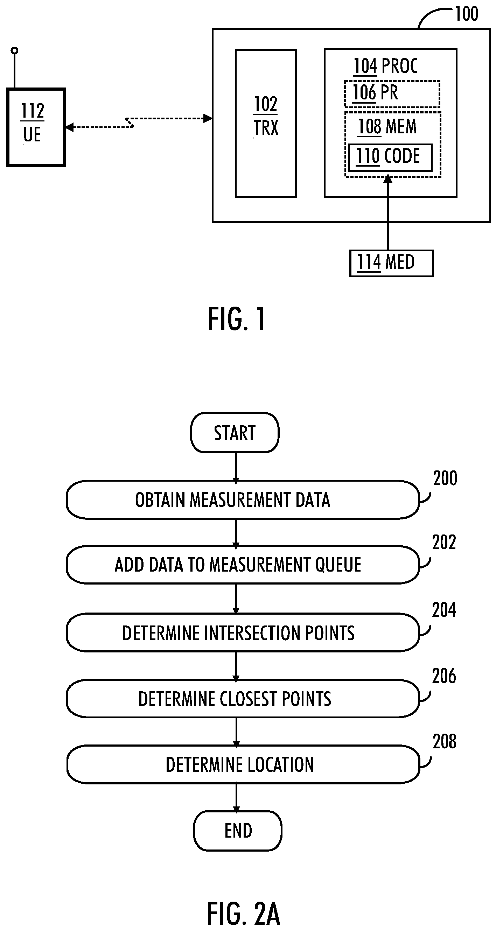

Let us study FIG. 1, which illustrates embodiments of Direction Finding (DF) or location finding apparatus 100. In an embodiment, the apparatus may be an ad hoc radio base station 100. Although the apparatus has been depicted as one entity, different modules and memory may be implemented in one or more physical or logical entities. For example, one entity may perform communication with the target mobile and another entity may perform calculations. For example, an ad hoc radio base station may take care of communication and the calculation may be performed with edge computing, in a mobile device, or in a cloud server, for example.

In an embodiment, when Direction Finding (DF) or location finding is applied, an existing LTE cellular radio network is already in place and operating. The LTE cellular radio network comprises one or more radio base stations. Each radio base station provides an access for user apparatuses 112 residing in a cell maintained by the radio base station to utilize communication resources of the LTE cellular radio network. The LTE cellular radio network also comprises a core network with numerous network elements.

The LTE user apparatus or mobile device 112 may also be known as a user equipment (UE), a radio terminal, a terminal device, a subscriber terminal, a smartphone, a mobile station, a mobile phone, a portable computer, a tablet computer, a smartwatch, smart glasses, a game terminal, a machine-type communication (MTC) apparatus, an IoT (Internet of Things) apparatus, a sensor apparatus, or some other type of wireless mobile communication device operating with or without a subscriber identification module (SIM) or an eSIM (embedded SIM). The LTE user apparatus 112 may be a device that is configured to associate the LTE user apparatus 112 and its user with a subscription and allows the user to interact with the LTE cellular radio network, i.e., the user apparatus 112 is capable of requesting service from the LTE cellular radio network. User apparatus 112 may present information to the user and allow the user to input information. In other words, the user apparatus 112 may be any apparatus capable of wirelessly receiving information from and/or wirelessly transmitting information to the LTE cellular radio network. Besides communication capabilities, the user apparatus 112 may include computer functionalities, functionalities of other data processing devices, and/or one or more sensors for example.

In an embodiment, the Direction Finding (DF) or location finding apparatus 100 or the ad hoc radio base station implements an ad hoc LTE cell to operate in parallel with the existing LTE cells. The ad hoc radio base station 100 may be used in a surveillance operation (such as in communications intelligence, or COMINT) to gather information regarding a target user apparatus or mobile device 112. In other words, the main reason to add the ad hoc radio base station 100 to an area is to get target user apparatuses or mobile devices 112 to connect to the ad hoc radio base station 100.

The ad hoc radio base station 100 comprises one or more radio transceivers 102 configured to receive and transmit in the LTE cellular radio network 200 and means for causing performance of the ad hoc radio base station 100. In an embodiment, the means comprise one or more processors 104.

In an embodiment illustrated in FIG. 1, the one or more processors 104 comprise one or more memories 108 including computer program code 110, and one or more microprocessors 106 configured to execute the computer program code 110 to cause the performance of the ad hoc radio base station 100.

In an alternative embodiment, the means comprise a circuitry configured to cause the performance of the ad hoc radio base station 100.

A non-exhaustive list of implementation techniques for the one or more microprocessors 106 and the one or more memories 108, or the circuitry includes, but is not limited to: logic components, standard integrated circuits, application-specific integrated circuits (ASIC), system-on-a-chip (SoC), application-specific standard products (ASSP), microprocessors, microcontrollers, digital signal processors, special-purpose computer chips, field-programmable gate arrays (FPGA), and other suitable electronics structures.

The term 'memory' 108 refers to a device that is capable of storing data run-time (= working memory) or permanently (= non-volatile memory). The working memory and the non-volatile memory may be implemented by a random-access memory (RAM), dynamic RAM (DRAM), static RAM (SRAM), a flash memory, a solid-state disk (SSD), PROM (programmable read-only memory), a suitable semiconductor, or any other means of implementing an electrical computer memory.

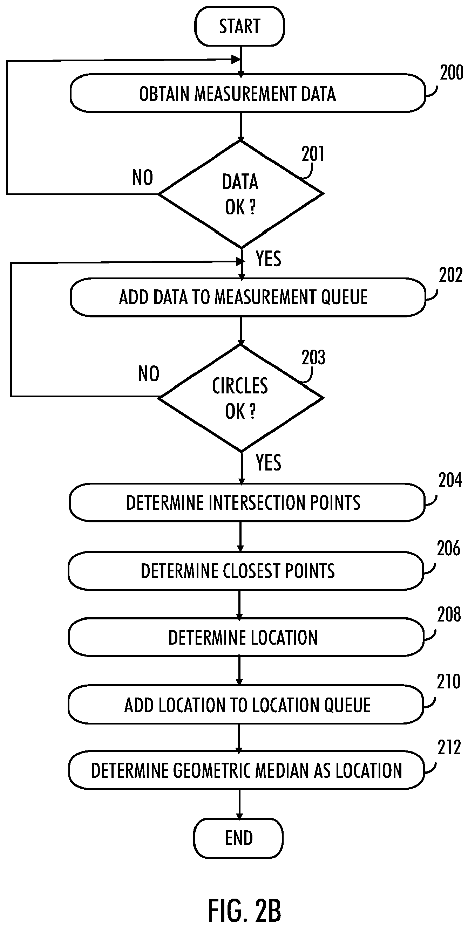

The computer program code (or software) 110 may be written by a suitable programming language (such as C, C++, assembler, or machine language, for example), and the resulting executable code may be stored in the one or more memories 108 and run by the one or more microprocessors 106. In an embodiment, the computer program code implements the method/algorithm illustrated in FIG. 2A and FIG. 2B. The computer program code 110 may be stored in a source code form, object code form, executable form, or in some intermediate form, but for use in the one or more microprocessors 106 it is in the executable form. There are many ways to structure the computer program code 110: the operations may be divided into modules, sub-routines, methods, classes, objects, applets, macros, etc., depending on the software design methodology and the programming language used. In modern programming environments, there are software libraries, i.e., compilations of ready-made functions, which may be utilized by the computer program code 110 for performing a wide variety of standard operations. In addition, an operating system (such as a general-purpose operating system or a real-time operating system) may provide the computer program code 110 with system services.

An embodiment provides a computer-readable medium 114 storing the computer program code 110, which, when loaded into the one or more microprocessors 106 and executed by the one or more microprocessors 106, causes the performance of the computer-implemented method/algorithm. The computer-readable medium 114 may comprise at least the following: any entity or device capable of carrying the computer program code 110 to the one or more microprocessors 106, a record medium, a computer memory, a read-only memory, an electrical carrier signal, a telecommunications signal, and a software distribution medium. In some jurisdictions, depending on the legislation and the patent practice, the computer-readable medium 114 may not be the telecommunications signal. In an embodiment, the computer-readable medium 114 is a computer-readable storage medium. In an embodiment, the computer-readable medium 114 is a non-transitory computer-readable storage medium.

Whether through creating an ad-hoc cell for the target mobile device 112 or otherwise, the Direction Finding (DF) or location finding apparatus 100 communicates with the target mobile device and is able to estimate the distance of the target device from the apparatus.

Let us study an embodiment of the invention with reference to the flowcharts of FIGS. 2A and 2B. The operations are not strictly in chronological order and some of the operations may be performed simultaneously or in an order differing from the given ones.

Other functions may also be executed between the operations or within the operations and other data exchanged between the operations. Some of the operations or part of the operations may also be left out or replaced by a corresponding operation or part of the operation. It should be noted that no special order of operations is required, except where necessary due to the logical requirements for the processing order.

The flowchart of FIG. 2A illustrates an example the operation of the Direction Finding (DF) or location finding apparatus 100 in an embodiment.

In step 200, the apparatus is configured to obtain measurement data from individual locations, the measurement data comprising a distance estimate to the target mobile device from an apparatus and the geographical location of the individual locations.

In an embodiment, the geographical location of the individual locations may be obtained from satellite locationing systems terrestrial position systems, positioning based on Wi-Fi networks, inertia sensors, etc., for example.

In step 202, the apparatus is configured to adding measurement data to a measurement data queue.

In step 204, the apparatus is configured to determine intersection points of circles having radiuses of measured distances and locations of the corresponding individual location as center points, when a given number of measurement data is present in the queue.

In step 206, the apparatus is configured to determine two intersection points closest to each other.

In step 208, the apparatus is configured to determine the estimated location of the target mobile device as center point of a vector connecting the two intersection points closest to each other.

The flowchart of FIG. 2B illustrates another example of the operation of the Direction Finding (DF) or location finding apparatus 100 in an embodiment.

Part of the steps in the embodiment of FIG. 2B are the same as in FIG. 2A. Same reference numbers have been used in those steps.

In step 200, the apparatus is configured to obtain measurement data from individual locations, the measurement data comprising a distance estimate to the target mobile device from an apparatus and the geographical location of the individual locations.

In step 201, the apparatus is configured to compare the obtained measurement data to predefined thresholds and, if the measurement data passes the comparison, the apparatus is configured to add the measurement data to a measurement data queue in step 202.

The process in step 201 may be denoted as pre-filtering or validation. Measurements from different locations are received, and the received measurement data is pre-filtered based on the distance difference between the measurement points. This may be performed in order to select the most relevant measurements to the calculations, i.e., sudden jumps on the distance estimate may be filtered out. Distance difference between measurement points is criterium for on filtering, due to the inaccuracy on the location of the measurement points and inaccuracy on the distance estimate. Too short distance differences may produce incorrect intersection points in later steps. The location of the measurement points can use any Global Navigation Satellite System (GNSS) approach, such as Global Positioning Satellite (GPS).

Additionally, related to the step 201, when there is a new measurement, it may only be used if the location of the location finding apparatus 100 has changed 'enough' between measurements. The value of 'enough' can vary and can be proportional to the distance estimate to the target: the longer the estimated distance, the bigger the change must be, and vice versa. A second step in the validation/prefiltering is to wait for a group of three measurements that define three intersecting circles. For example, buffer two measurements (#1 and #2) whose distance circles do not intersect, and once there is a third measurement that happens to intersect with measurement #1, drop measurement #2 and keep waiting for one more measurement that meets the intersecting criteria. The pre-filtering ensures the measurement data in the measurement data queue includes good measurements, i.e., it filters out outliers or bad measurement data, thereby improving the quality of the overall estimate.

In step 203, the apparatus is configured to calculate circles having radiuses of measured distances and locations of the corresponding individual location as center points and determine whether circles formed based on the measurement data intersect each other at least in one point.

Thus, as each measurement result comprises the individual location of the measurement and estimated distance to the target mobile device, it is possible to form an equation of a circle, which has the individual location as the center point of the circle and the radius of the circle is estimated distance to the target mobile device. In general, the equation of a circle may be written as

$$(x - a)^2 + (y - b)^2 = r^2, \qquad (1)$$

where (a, b) is the center coordinates of the circle and *r* is the diameter.

If so, the apparatus is configured, in step 204, to determine intersection points of the circles having radiuses of measured distances and locations of the corresponding individual location as center points, when a given number of measurement data is present in the measurement data queue.

In step 206, the apparatus is configured to determine two intersection points closest to each other.

In step 208, the apparatus is configured to determine the estimated location of the target mobile device as center point of a vector connecting the two intersection points closest to each other.

In step 210, the apparatus is configured to add estimates of the location of the target mobile device to a location queue.

When a given minimum number of locations of the target mobile device is present in the location queue, the apparatus is configured, in step 212, to determine a geometrical median of the locations in the location queue and output the geometrical median of the locations as the overall estimated location of the target mobile device. Note, the size of the location queue can be dynamic and can vary between configured minimum and maximum values.

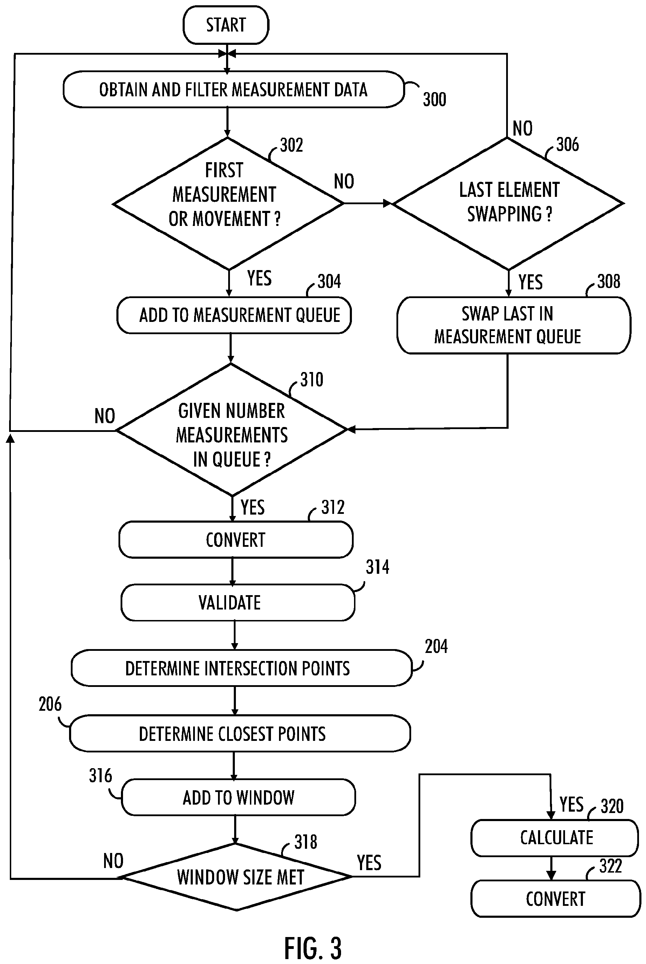

The flowchart of FIG. 3 illustrates another example of the operation of the Direction Finding (DF) or location finding apparatus 100 in an embodiment.

In step 300, the apparatus is configured to obtain measurement data from individual locations and filter the data utilizing predefined thresholds as described above in steps 200 and 201.

In step 302, the apparatus is configured to check if this is a first measurement of a measurement queue or if movement is detected. The movement is for the location finding apparatus 100, not the target mobile device. This makes use the new location is different from a previous location in the measurement queue.

In an embodiment, a measurement is added to the measurement queue in step 304 if it can be detected that the location finding apparatus 100 has moved, of if the queue is empty.

If the measurement was not the first measurement to be added to queue and no movement is detected, in step 304, if condition for swapping the last element in the measurement queue to the present measurement fulfils. The swap may be performed in step 308 if the present measurement is more accurate than the last in the queue.

In step 310 it is checked if there are a given number of measurements in the queue. For example, the given number may be three. If not, new measurements are required. If yes, measurement data, which had been obtained in spherical coordinate system, are converted in step 312 into the cartesian coordinate system.

This may be done to allow simpler calculations and true equations of circles. Moreover, the first measurement point is initialized as zero-point (origin), reference point, and other points are differences from that. This way it is possible to keep using values which are as small as possible. Indeed, projections to the cartesian coordinate system can produce large metric values depending on geographical location in the world.

In step 314, the measurements are validated. Based on the measurement data circles having radiuses of measured distances and locations of the corresponding individual location as center points are determined. Then it is determined whether the circles formed based on the measurement data intersect each other at least in one point and select measurement data to the measurement data queue based on the determination.

The next two steps are the same as in FIG. 2B.

In the next step 204, the intersection points of the circles are determined.

In step 206, the apparatus is configured to determine two intersection points closest to each other.

Assuming here, for simplicity, that there are three measurements. A second order linear circle equation is calculated based on each measurement, where the circles have radiuses of measured distances and locations of the corresponding individual location as center points. Utilizing these circle equations, three calculations, in this example, are done. Equations between measurements 1&2, between 1&3, and between 2&3 are solved. As a result, up to six intersection points may be found.

Again, the equation of a circle may be written as

$$(x - a)^2 + (y - b)^2 = r^2, \qquad (1)$$

where (a, b) is the center coordinates of the circle and *r* is the diameter.

These kinds of equations may be written based on all measurements data points and then solving the equations for the intersection points. As the calculation is simple basic mathematics, it is not disclosed here.

Final selection of target point is done by calculating an internal distance difference between the found intersection points, and by sorting out point pairs in an ascending order based on distance difference. The selection is done by only choosing the pair that has the smallest distance between the points. The estimated location of the target is defined by the center coordinates of the vector connecting points of the closest pair.

In step 316, the found location estimate of the target mobile device is added to a location queue.

In an embodiment, a windowing procedure may be applied to stabilize final estimates. A window or length of the queue of the location estimates has an initial and maximum size as parameters. The window has a minimum and maximum size. When the minimum size is reached, the geometrical median is calculated a first time and is given as statistically best estimate of the target mobile. The window size continues to increase until the defined maximum size is reached. After that, the oldest location estimates are dropped from the window. This means a number of location estimates in geometrical median calculations is always between predefined minimum and maximum window size. This dynamic behavior of this sliding window enables fast response in the beginning, and, on the other hand statistically, better estimates over a time. By changing these parameters, it is possible adjust this behavior. When location estimates are added, the size increases dynamically until it reaches a maximum size. This is tested in step 318. If maximum size is not reached, more estimates may be taken. By changing window parameters, it is possible to affect the algorithm behavior, fast and less accurate or steady and statistically more accurate.

Then a geometrical median of the location points in the window is calculated in step 320. This provides, due to the nature of the measurement data and distance estimates, statistically the best estimate about the real target mobile location. As all the calculations are done in the cartesian coordinate system, points returned from windowing procedure may be reverted to spherical coordinates in step 322.

In an embodiment, the accuracy of obtained estimation result may also be estimated. The maximum distance difference to a previously calculated target location estimate may be determined and the distance difference to cartesian coordinate x/y plane average coordinates. To provide a simple numerical, non-limiting example, assume that the closest pair selection produces a cartesian coordinate pair that has 30 meters distance difference between the points. As the center coordinates of that vector are selected, range from center coordinates to actual intersection point can be up to 15 meters. Therefore, 15 meters can be thought to be highest accuracy algorithm can provide using these example distances.

Further, it is possible to calculate additional information like bearing angle towards to the target mobile location, bearing sector angle based on accuracy calculations and distance estimate to calculated target location.

Those skilled in the art will recognize there are various ways to visualize the results, such as in a User Interface. For example, some approaches can include:

(1) a 'Probability circle' of the target shown on map, based on the accuracy of the estimated location,

(2) a 'Target sector' drawn from the location of the location finding apparatus 100 to the edges of the probability circle,

(3) color coding of the 'target sector' based on distance to target.

(4) a heatmap to visualize the collected target locations on the map, as well as showing the most likely location of the target, and

Combinations thereof.

The windowing and queuing procedure mentioned above, the proposed solution will not get stuck on repeating calculations with outdated measurement data. The queuing mechanism is used to keep a defined number of intersecting distance circles in calculation and a windowing mechanism is used to provide the best statistical estimate of the target location over a time period.

In an embodiment instead of or in addition to closest pair selection, calculated intersection points may be stored in location-based clusters and target mobile location may be estimated from filling rate of clusters. Clusters can be implemented in binary search tree, where key is hashed from coordinates rounded to certain accuracy. That way, intersection points within a certain range will be stored to the same cluster. Also, for the closest pair selection, it is possible to use a K-nearest neighbors algorithm, and apply a heatmap for visualization of the result.

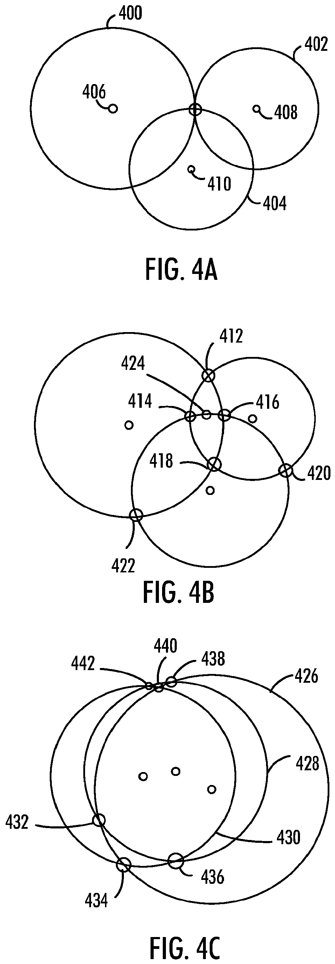

Let us study some examples with FIGS. 4A, 4B and 4C.

FIG. 4A shows a simple situation where all measurements are accurate. Three measurements produce three circles 400, 402, 404. The center points 406, 408, 410 are the individual locations where measurements were made. The three circles have one intersection point 412 where all of the equations are simultaneously satisfied. Formal triangulation measures can be used.

FIG. 4B shows a situation where the measurements are inaccurate. Three circles intersect in six points 412 - 422. The closest pair of points are points 414 and 416 and center coordinates 424 of the vector connecting the points 414 and 416 are selected as estimate of the target mobile location estimate.

FIG. 4C shows another inaccurate distance estimate. This is a common situation resulting from the queuing procedure. There are three circles 426, 428, 430 and six intersections 426 - 442 with the closest pair of points being 440 and 442.

Those skilled in the art will recognize that the various embodiments may include processing circuitry of various types. The processing circuitry might include, but are not limited to, general-purpose microprocessors; Central Processing Units (CPUs); Digital Signal Processors (DSPs); specialized processors such as Network Processors (NPs) or Network Processing Units (NPUs), Graphics Processing Units (GPUs); Field Programmable Gate Arrays (FPGAs); or similar devices. The processing circuitry may operate under the control of unique program instructions stored in their memory (software and/or firmware) to execute, in combination with certain non-processor circuits, either a portion or the entirety of the functionalities described for the methods and/or systems herein. Alternatively, these functions might be executed by a state machine devoid of stored program instructions, or through one or more Application-Specific Integrated Circuits (ASICs), where each function or a combination of functions is realized through dedicated logic or circuit designs. Naturally, a hybrid approach combining these methodologies may be employed. For certain disclosed embodiments, a hardware device, possibly integrated with software, firmware, or both, might be denominated as circuitry, logic, or circuits "configured to" or "adapted to" execute a series of operations, steps, methods, processes, algorithms, functions, or techniques as described herein for various implementations.

Additionally, some embodiments may incorporate a non-transitory computer-readable storage medium that stores computer-readable instructions for programming any combination of a computer, server, appliance, device, module, processor, or circuit (collectively "system"), each potentially equipped with one or more processors. These instructions, when executed, enable the system to perform the functions as delineated and claimed in this document. Such non-transitory computer-readable storage mediums can include, but are not limited to, hard disks, optical storage devices, magnetic storage devices, Read-Only Memory (ROM), Programmable Read-Only Memory (PROM), Erasable Programmable Read-Only Memory (EPROM), Electrically Erasable Programmable Read-Only Memory (EEPROM), Flash memory, etc. The software, once stored on these mediums, includes executable instructions that, upon execution by one or more processors or any programmable circuitry, instruct the processor or circuitry to undertake a series of operations, steps, methods, processes, algorithms, functions, or techniques as detailed herein for the various embodiments.

While the present disclosure has been detailed and depicted through specific embodiments and examples, it is to be understood by those skilled in the art that numerous variations and modifications can perform equivalent functions or yield comparable results. Such alternative embodiments and variations, which may not be explicitly mentioned but achieve the objectives and adhere to the principles disclosed herein, fall within its spirit and scope. Accordingly, they are envisioned and encompassed by this disclosure, warranting protection under the claims associated herewith. Additionally, the present disclosure anticipates combinations and permutations of the described elements, operations, steps, methods, processes, algorithms, functions, techniques, modules, circuits, etc., in any manner conceivable, whether collectively, in subsets, or individually, further broadening the ambit of potential embodiments.

## Claims

1. A method for estimating geographical location of a target mobile device (112), the method comprising:

   obtaining (200) measurement data from individual locations, the measurement data comprising a distance estimate to the target mobile device (112) from an apparatus (100) and the individual locations;
   adding (202) the measurement data to a measurement data queue;
   determining (204) intersection points of circles having radiuses of measured distances and locations of a corresponding individual location of the individual locations as center points, when a given number of measurement data is present in the measurement data queue;
   determining (206) intersection points closest to each other; and
   determining (208) an estimated location of the target mobile device (112) as a center point of a vector connecting the intersection points closest to each other.

2. The method as claimed in claim 1, further comprising:
   comparing the obtained measurement data to predefined thresholds and selecting the measurement data to the measurement data queue based on the comparing.

3. The method as claimed in any one of claims 1 to 2, further comprising:
   prior to the adding, pre-filtering the measurement data to exclude some of the measurement data.

4. The method as claimed in any one of claims 1 to 3, further comprising:
   determining whether circles formed based on the measurement data intersect each other at least in one point and adding the measurement data to the measurement data queue based on the determination.

5. The method as claimed in any one of claims 1 to 4, further comprising:

   obtaining the measurement data in a spherical coordinate system; and
   performing spherical coordinate conversion to a cartesian coordinate system to the measurement data in the measurement data queue.

6. The method as claimed in claim 5, wherein the conversion includes adjusting coordinates of the cartesian coordinate system by placing a first measurement at origin and adjusting the coordinates of subsequent measurements accordingly.

7. The method as claimed in any one of claims 1 to 6, further comprising:

   adding the estimated location of the target mobile device (112) to a location queue; and
   utilizing values in the location queue to determine an overall estimated location of the target mobile device (112).

8. The method as claimed in claim 7, further comprising:

when a given minimum number of locations of the target mobile device (112) is present in the location queue, determining a geometrical median of the locations in the location queue, and outputting the geometrical median of the locations as the overall estimated location of the target mobile device (112).

9. The method as claimed in claim 8, further comprising:
discarding an oldest location before adding a newer location to the location queue when a given maximum number of locations of the target mobile device (112) is present in the location queue.

10. The method as claimed in claim 7, further comprising:
utilizing machine learning on the values in the location queue to determine the overall estimated location.

11. Computer program code comprising instructions for implementing the method as claimed in any preceding claim.

12. A computer-readable medium storing the computer program code as claimed in claim 11.

13. A system comprising:

the apparatus (100); and
one or more processors configured to execute the computer code as claimed in claim 11.

14. The system as claimed in claim 13, wherein the apparatus (100) is an ad hoc base station.

15. The system as claimed in claim 13, wherein the one or more processors are in an edge computing device or a cloud server, separate from the apparatus (100).

FIG. 1

FIG. 2A

START

OBTAIN MEASUREMENT DATA — 200

NO ← DATA OK ? — 201

YES

ADD DATA TO MEASUREMENT QUEUE — 202

NO ← CIRCLES OK ? — 203

YES

DETERMINE INTERSECTION POINTS — 204

DETERMINE CLOSEST POINTS — 206

DETERMINE LOCATION — 208

ADD LOCATION TO LOCATION QUEUE — 210

DETERMINE GEOMETRIC MEDIAN AS LOCATION — 212

END

FIG. 2B

START

OBTAIN AND FILTER MEASUREMENT DATA — 300

302 — FIRST MEASUREMENT OR MOVEMENT ? — NO → LAST ELEMENT SWAPPING ? — 306 (NO)

YES — 304 — ADD TO MEASUREMENT QUEUE

YES — 308 — SWAP LAST IN MEASUREMENT QUEUE

310 — GIVEN NUMBER MEASUREMENTS IN QUEUE ? — NO

YES — 312 — CONVERT

VALIDATE — 314

DETERMINE INTERSECTION POINTS — 204

206 — DETERMINE CLOSEST POINTS

316 — ADD TO WINDOW

318 — WINDOW SIZE MET — NO / YES

YES — 320 — CALCULATE

CONVERT — 322

FIG. 3

FIG. 4A

FIG. 4B

FIG. 4C

Europäisches
Patentamt

European
Patent Office

Office européen
des brevets

## EUROPEAN SEARCH REPORT

Application Number

EP 24 17 6495

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/368411 A1 (KOMATSU ATSUSHI [JP]) 28 December 2017 (2017-12-28) * paragraph [0039] - paragraph [0045]; figure 2 * | 1-15 | INV. G01S5/14 G01S5/02 |
| X | US 2021/302530 A1 (COVALIOV ANDREI [US] ET AL) 30 September 2021 (2021-09-30) * paragraph [0059] * * paragraph [0064] - paragraph [0084]; figures 2-10 * | 1-15 | |
| X | US 9 571 978 B1 (ANANTH SHARATH [US]) 14 February 2017 (2017-02-14) * figure 2C * | 1-15 | |
| X | US 2016/170004 A1 (KIM JIN-WOO [KR] ET AL) 16 June 2016 (2016-06-16) * figure 4 * | 1-15 | |
| A | US 2004/248589 A1 (GWON YOUNGJUNE LEE [US] ET AL) 9 December 2004 (2004-12-09) * figures 6a-7h * | 1-15 | **TECHNICAL FIELDS SEARCHED (IPC)**<br><br>G01S |

The present search report has been drawn up for all claims

| Place of search | Date of completion of the search | Examiner |
|---|---|---|
| Munich | 8 October 2024 | Ribbe, Jonas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 6495

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2024

| Patent document cited in search report | | Publication date | Patent family member(s) | | Publication date |
|---|---|---|---|---|---|
| US 2017368411 | A1 | 28-12-2017 | JP | 6796410 B2 | 09-12-2020 |
| | | | JP | 2018004333 A | 11-01-2018 |
| | | | US | 2017368411 A1 | 28-12-2017 |
| US 2021302530 | A1 | 30-09-2021 | CA | 3164454 A1 | 30-09-2021 |
| | | | CN | 115280173 A | 01-11-2022 |
| | | | EP | 4070121 A1 | 12-10-2022 |
| | | | JP | 7524328 B2 | 29-07-2024 |
| | | | JP | 2023510936 A | 15-03-2023 |
| | | | KR | 20220124265 A | 13-09-2022 |
| | | | US | 11073596 B1 | 27-07-2021 |
| | | | US | 2021302530 A1 | 30-09-2021 |
| | | | WO | 2021195666 A1 | 30-09-2021 |
| US 9571978 | B1 | 14-02-2017 | NONE | | |
| US 2016170004 | A1 | 16-06-2016 | CN | 105704659 A | 22-06-2016 |
| | | | EP | 3032272 A1 | 15-06-2016 |
| | | | KR | 20160071803 A | 22-06-2016 |
| | | | US | 2016170004 A1 | 16-06-2016 |
| US 2004248589 | A1 | 09-12-2004 | JP | 4499484 B2 | 07-07-2010 |
| | | | JP | 2004361412 A | 24-12-2004 |
| | | | US | 2004248589 A1 | 09-12-2004 |

EPO FORM P0459

For more details about this annex : see Official Journal of the European Patent Office, No. 12/82